# EUROPEAN PATENT SPECIFICATION

(11) **EP 0 545 185 B1**
(45) Date of publication and mention of the grant of the patent: **23.10.1996**
(21) Application number: 92119867.7
(22) Date of filing: 21.11.1992
(51) Int. Cl.: B60N 2/28

(54) **Infant seat**
Kindersitz
Siège d'enfant

(30) Priority: 06.12.1991 JP 100725/91
(43) Date of publication of application: 09.06.1993
(73) Proprietor: KABUSHIKI KAISHA TOKAI-RIKA-DENKI-SEISAKUSHO, Niwa Aichi-ken (JP)
(72) Inventor: Nagasaka, Chicao, c/o K.K. TOKAI-RIKA-DENKI, Ohguchi-cho Niwa, Aichi-ken (JP); Amano, Tokuhiro, c/o K.K. TOKAI-RIKA-DENKI, Ohguchi-cho Niwa, Aichi-ken (JP); Tsuge, Hiroshi, c/o K.K. TOKAI-RIKA-DENKI, Ohguchi-cho Niwa, Aichi-ken (JP); Sasaki, Sumikazu, c/o K.K. TOKAI-RIKA-DENKI, Ohguchi-cho Niwa, Aichi-ken (JP)
(74) Representative: Fuhlendorf, Jörn, Dipl.-Ing.

(56) References cited:
- EP-A- 0 218 444
- EP-A- 0 302 607
- AU-B- 597 097
- US-A- 4 688 849
- US-A- 4 743 063

## Description

### BACKGROUND OF THE INVENTION

### Field of the Invention

The present invention relates to an infant seat mounted on a seat of a vehicle or the like, and in particular to an infant seat including a reclining function.

### Description of the Related Art

A vehicle is provided with a seat belt apparatus as a passenger protecting apparatus. In general, a seat and the seat belt apparatus in the vehicle is provided to correspond to the physique of an adult passenger, and therefore are unsuitable for an infant having a small body.

Hence, an infant seat is used for an infant in the front-seat or back seat. The infant seat is provided with a seat belt corresponding to the physique of an infant. The seat belt serves to secure the infant to the infant seat when the vehicle is in motion, as well as when the vehicle rapidly decelerates.

The seat belt mounted to the infant seat includes a crotch belt and a shoulder belt. One end of the crotch belt is connected to a seat cushion, and the other end is connected to a buckle. Further, one end of the shoulder belt is connected to a seat back, the other end is provided with a tongue plate. After the infant is placed in the infant seat, the shoulder belt is drawn out from above the shoulders of the infant, and a length of the shoulder belt is adjusted to engage the tongue plate with the buckle. Thereby, the infant in the infant seat is secured by the seat belt which includes the shoulder belt and the crotch belt.

Among infant seats, there are some having a reclining mechanism in which an inclination of the seat back is variable. The reclining mechanism enables the infant to ride in the vehicle in either a lying down or sitting up position.

However, if the inclination of the seat back is varied between these two positions, the length of the seat belt including the shoulder beld and the crotch belt, which is required for securing the infant in an optimal position, is also varied. That ist, when the seat back is brought down, the length of the seat belt must be increased. When the seat back is raised up, the length of the seat belt must be decreased. As a result, it is necessary to adjust the length of the seat belt whenever the inclination of the seat back is varied.

Australian patent AU-B-597 097 discloses an infant seat according to the preamble of claim 1. This document does not raise the problem mentioned above nor the problem to be solved, i.e. to adjust the length of the seat belt, depending on the tilt angle.

### SUMMARY OF THE INVENTION

In view of the facts set forth above, it is an object of the present invention to provide an infant seat which can secure a sitting infant in the optimal position without adjusting a length of a seat belt even if an inclination of a seat back is varied. According to the invention, an infant seat is disclosed having the features set forth in claim 1. Further features are given in the dependent claims. The infant seat includes a seat cushion for holding a hip portion of an infant, a seat back connected to said seat cushion so as to be rotatable about a rotary shaft of said seat back to hold a body portion and a head portion of said infant, a shoulder belt connected to said seat back, a crotch belt drawn-out from a predetermined position of said seat cushion, one end of said crotch belt engaging said shoulder belt to secure said infant in said infant seat, an anchor member provided on said seat back and provided apart from said rotary shaft, and to which the other end of said crotch belt is connected after passing on a lower surface side of a sitting portion provided for said seat cushion. The anchor member moves according to an amount of a tilt angle of said back when said tilt angle of said seat back to said seat cushion is varied and is provided such that an intermediate portion of said crotch belt is fed out from said predetermined position of said seat cushion to an upper surface side of said sitting portion of said seat cushion and is pulled back to the lower surface side of said sitting portion of said seat cushion, so as to secure with a substantially constant securing force said infant secured to said infant seat.

According to the present invention constructed as set forth above, the seat back is rotated for reclining. The infant seat is provided with a seat belt including a shoulder belt and a crotch belt. The other end of the crotch belt is connected to the anchor member which is provided for the seat back. The intermediate portion is fed out from the predetermined position of the seat cushion to an upper surface side of the sitting portion of the seat cushion, and is pulled back to the lower surface side of the sitting portion of the seat cushion. The one end is drawn out on the upper surface side of the sitting portion of the seat cushion, and engages the shoulder belt. Since the anchor member is offset from the rotary shaft of the seat back, the anchor member moves with the rotation of the seat back according to a varied inclination of the seat back. When the seat back is raised up, the anchor member is moved so that a length required for the crotch belt disposed on the lower surface side of the sitting portion of the seat cushion is increased. Accordingly, slack is provided to the seat belt for securing the sitting infant when raising up the seat back. However, it is possible to draw-in a slack portion of the seat belt on the lower surface side of the sitting portion of the seat cushion. Further, when the seat back is brought down, the anchor member moves in the direction opposed to a moving direction at a time when raising up the seat back. Through the seat belt is drawn by bringing down the seat back, the anchor member is moved so that the crotch belt disposed on the lower surface side of the sitting portion of the seat cushion is drawn-out on the upper surface side of the sitting portion. Thereby, a surface length of the seat belt can be increased. Consequently, the seat belt never excessively secures the sitting infant even if the seat back is brought down. Thus, in the infant seat of the present invention, the surface length of the seat belt is varied according to the variation of the inclination of the seat back with respect to the seat cushion. Therefore, it is possible to secure the sitting infant in the optimal position without adjusting the length of the seat belt each time when the inclination of the seat back is varied.

As described hereinbefore, in the infant seat of the present invention, when the inclination of the seat back to the seat cushion is varied, the length of the crotch belt on the upper surface side of the sitting portion of the seat cushion is varied. That is, the crotch belt is drawn-out in a condition where the seat back is brought down, and the crotch belt is drawn-in in a condition where the seat back is raised up. Hence, it is not necessary to adjust the length of the seat belt even if a reclining angle of the seat back is varied. There is an excellent effect in that the reclining angle can be easily varied.

### BRIEF DESCRIPTION OF THE DRAWINGS

Fig. 1 is a perspective view showing one embodiment of an infant seat of the present invention;
Fig. 2 is an exploded perspective view of the one embodiment of the infant seat of the present invention; and
Fig. 3 is a schematic sectional view taken along the line 3-3 of Fig. 1.

### DESCRIPTION OF THE PREFERRED EMBODIMENTS

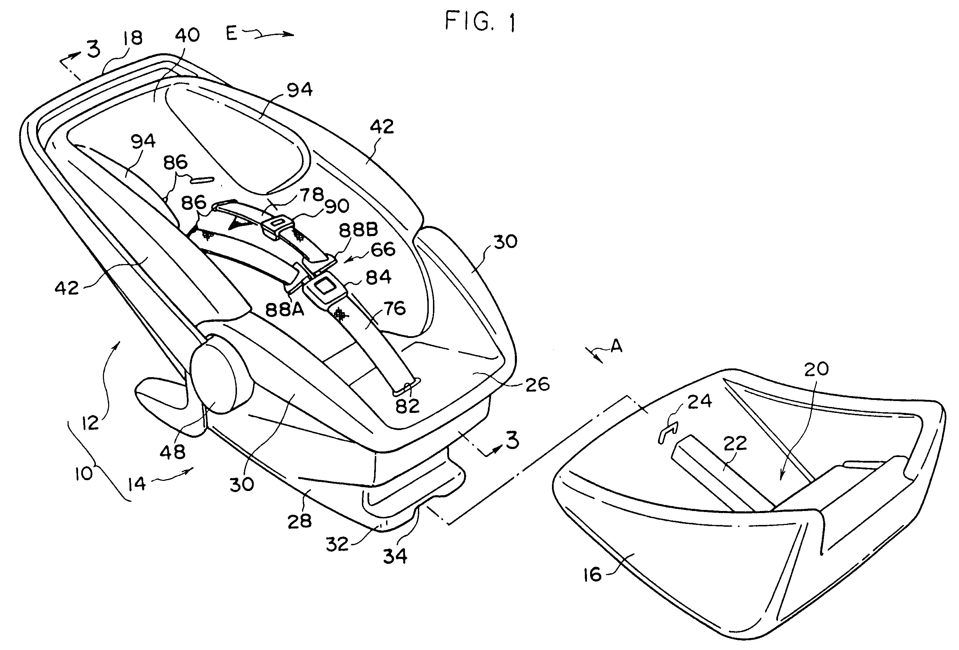

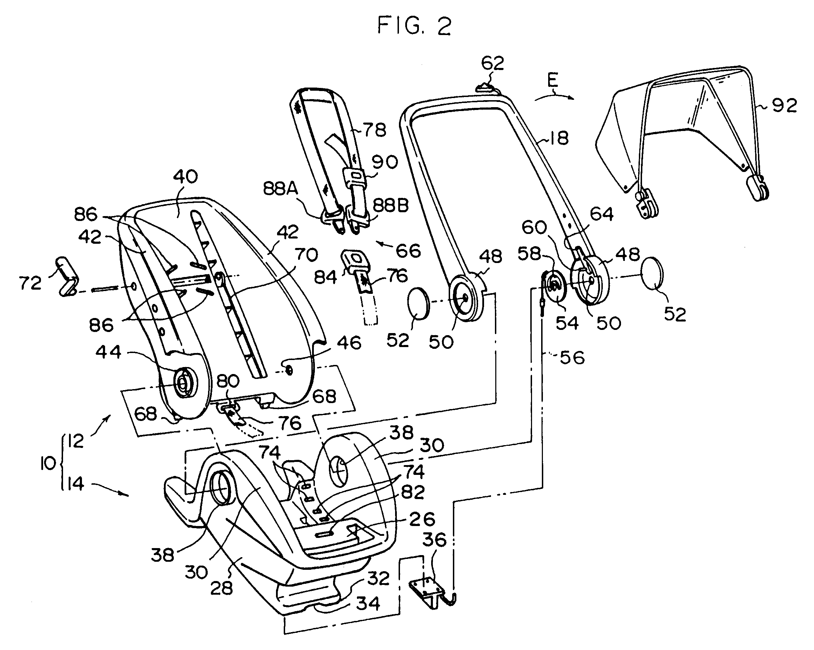

Figs. 1 to 3 illustrate an infant seat 10 serving as a seat for an infant in accordance with one embodiment of the present invention. The infant seat 10 is used for a baby, and includes a seat back 12 and a seat cushion 14 as shown in Figs. 1 and 2. The infant seat 10 can be mounted to a seat base 16 which is secured to an unillustrated seat of a vehicle. Further, the infant seat 10 is provided with a carrying handle 18, and can be carried by grasping the carrying handle 18.

The seat base 16 is secured to the seat of the vehicle by a seat belt. For example, in a three-point seat belt apparatus, a shoulder webbing and a lap webbing are placed in a predetermined position of the seat base. Thereafter, a tongue plate of the seat belt apparatus engages a buckle. Thus, the seat base 16 is secured to the seat (not shown). The infant seat 10 is mounted on the seat base 16 so that the infant seat 10 can be secured to the seat.

The seat base 16 is substantially triangular pillar-shaped and box-shaped, and has side surfaces, one of which is opened. A seat cushion 14 as will be described later is inserted into the opening portion. An insertion supporting portion 20 into which the seat cushion 14 is inserted, is provided at the bottom of the opening of the seat base 16. Further, a long block-shaped guide 22 is disposed in an inserting direction (i.e., in the direction shown by the arrow marked A in Fig. 1) of the seat cushion 14 at an intermediate portion of the opening of the seat base 16. A catch member 24 engaging the seat cushion 14 is disposed on the upstream side of the inserting direction of the seat cushion 14 of the guide 22. The seat cushion 14 is secured to the seat base 16 by the insertion supporting portion 20, the guide 22 and the catch member 24.

Fig. 2 illustrates a schematic construction of the infant seat 10. The infant seat 10 includes the seat back 12 and the seat cushion 14 covered with a seat cover (i.e., in a condition shown in Fig. 1).

The seat cushion 14 includes a sitting portion 26 where the infant is placed, a base portion 28 under the sitting portion 26 and a pair of side supports 30 which are provided at both sides of the sitting portion 26 to hold a hip portion of the sitting infant. The base portion 28 is provided with a concave portion 32 in an inserting direction into the seat base 16 so that the concave portion 32 is inserted into the insertion supporting portion 20 of the seat base 16. At a bottom surface of the base portion 28, a groove portion 34 (which is only partly shown in Fig. 1) is provided to correspond to the insertion supporting portion 20 of the seat base 16. The guide 22 is fitted with the groove portion 34 to guide the seat cushion 14 to the back portion in the inserting direction of the seat base 16. At the bottom surface of the base portion 28, a hook portion 36 (shown in Fig. 2) is disposed so that the catch member 24 of the seat base 16 is fitted to the hook portion 36. The hook portion 36 is provided with an unillustrated projecting pin so that the projecting pin is inserted into the catch member 24 so as not to remove the cushion seat 14 from the seat base 16. Accordingly, the seat cushion 14 is mounted and fixed to the seat base 16.

Pivotally supporting holes 38 are coaxially provided in side supports 30 of the seat cushion 14, and extend outwardly in a cylindrical form. The seat back 12 is rotatably supported by the pivotally supporting holes 38.

The seat back 12 includes a back plate portion 40 and a pair of side supports 42 which are at both sides of the back plate portion 40 to hold the hip portion and a head portion of the infant. Rotary shafts 44 extend coaxially from the respective lower ends of the pair of side supports 42. The respective rotary shafts 44 are substantially double cylinder-shaped, and an outer cylinder of the double cylinders is inserted into the pivotally supporting hole 38 of the seat cushion 14. Thereby, the seat back 12 can be rotatably supported by the seat cushion 14. Through-holes 46 for mounting a carrying handle 18 are provided by passing through the side supports 42 in axial center portions of rotary shafts 44.

The carrying handle 18 is substantially rectangular, and both ends are provided with flange portions 48. Through holes 50 are coaxially provided in the respective flanges 48. The carrying handle 18 is arranged such that the flange portions 48 are opposed to the outside of the side supports 30 of the seat cushion 14, and the through-holes 50 and the pivotally supporting holes 38 are disposed coaxially with each other. Further, an unillustrated shaft is inserted and is rotatably mounted between the through hole 50 and the through hole 46 of the seat back 12. Caps 52 are disposed in an outward direction of the flanges 48 of the carrying handle 18 so as to hide the shaft.

A substantially disk-shaped lock releasing plate 54 is rotatably arranged in an inward direction of one of the flanges 48 of the carrying handle 18. One end of a wire 56 is connected to an outer peripheral end of the lock releasing plate 54. The other end of the wire 56 is connected to the hook portion 36 of the seat cushion 14. Accordingly, when the wire 56 is drawn, an unillustrated projecting pin of the hook portion 36 is accommodated to release an engagement of the hook portion 36 with the catch member 24 of the seat base 16. At that time, the projecting pin is loaded in a projecting direction, and the lock releasing plate 54 draws the wire 56 against the loading force.

A long guide groove 58 is provided in the form of a circular arc in the lock releasing plate 54. An engaging pin 60 is inserted into the guide groove 58. On an outer surface in the radial direction of the lock releasing plate 54, the guide groove 58 is provided with unillustrated engaging teeth which can engage the engaging pin 60 at any position.

The engaging pin 60 is connected through the wire 64 to a lock releasing knob 62 which is provided at an intermediate portion of the carrying handle 18. In general, the engaging pin 60 is loaded on an inner side of the radial direction of the lock releasing plate 54, and is moved along an inner side surface of the guide groove 58 according to a rotation of the carrying handle 18. Hence, the lock releasing plate 54 is not rotated. When the lock releasing knob 62 is activated, the engaging pin 60 contacts an outer side surface of the guide groove 58 to engage the engaging pin 60 with the lock releasing plate 54. In this condition, the lock releasing plate 54 is rotated by rotating the carrying handle 18 in the direction shown by the arrow marked E in Fig. 2. As a result, the wire 56 is drawn.

A description will now be given of a reclining structure and a seat belt 66 of the infant seat 10 according to the embodiment hereinafter.

Lock pins 68 are disposed so as to project at a lower end of the back plate portion 40 of the seat back 12 and in the vicinity of the respective side supports 42. The lock pins 68 are coupled to a reclining lever 72 through a link 70, and is projected by a rotating operation of the reclining lever 72.

Further, pin inserting holes 74 are provided in a sitting portion 26 of the seat cushion 14 and in the vicinity of the pair of side supports 30. The pin inserting holes 74 are disposed at a constant interval starting from an axial center of the pivotally supporting hole 38. The seat back 12 is held with a lock pin 68 inserted into any one of the pin inserting holes 74 corresponding to a rotation position. That is, an inclination of the seat back 12 in relation to the seat cushion 14 can be varied by varying the pin inserting hole 74 into which the lock pin 68 is inserted.

On the other hand, the seat belt includes a crotch belt 76 and a shoulder belt 78. One end of the crotch belt 76 is connected to a crotch belt anchor 80 having one end which is arranged at a lower end of the seat back 12. The crotch belt anchor 80 is offset from the axial center of the rotary shaft 44 of the seat back 12 so as to move substantially under the seat cushion 14 by rotation about the rotary shaft 44.

In the seat cushion 14, a belt inserting hole 82 serving as a belt winding portion is provided in an intermediate portion of the sitting portion 26. An intermediate portion of the crotch belt 76 passes through the belt inserting hole 82. The crotch belt 76 is thereby upwardly drawn-out after passing through the belt inserting hole 82 of the seat cushion 14. A buckle 84 is provided at a distal end of the crotch belt 76.

The shoulder belt 78 of the seat belt 66 is arranged on the seat back 12. A plurality of pairs of belt inserting holes 86 are provided in the back plate portion 40 of the seat back 12. A tongue plate 88A is provided at one end of the shoulder belt 78. The other end of the shoulder belt 78 passes through one of the pairs of belt inserting holes of the plurality of pairs of belt inserting holes 86, and is folded, and is drawn-out of one of the other belt inserting holes 86.

The distal end of the shoulder belt 78 drawn-out of the belt inserting hole 86 is wound and folded around the tongue plate 88B. The tongue plate 88B is paired with the tongue plate 88A to engage the buckle 84. A belt adjusting metal 90 is provided in the vicinity of the tongue plate 88B to hold the shoulder belt 78 on both sides of the tongue plate 88B between the belt adjusting metal 90. A holding position of the shoulder belt 78 by the belt adjusting metal 90 is relatively moved to vary the length of the shoulder belt 78 between the pair of tongue plates 88A and 88B, and to adjust the length of the seat belt 66.

In the infant seat 10, the side supports 42 of the seat back 12 or the carrying handle 18 may be provided with a shade 92 if needed. Further, a head support cushion 94 may be provided in order to hold a head portion of the infant in the infant seat 10 as shown in Fig. 1.

The operation of the embodiment will be described hereinafter.

The infant seat 10 is mounted to the vehicle by mounting the base portion 28 of the seat cushion 14 to the seat base 16 which is mounted to the seat of the vehicle. In this case, the catch member 24 of the seat base 16 engages the hook portion 36 of the base portion 28 so as not to be able to remove the infant seat 10. When the infant seat 10 is removed from the seat base 16, the lock releasing knob 62 is activated, and concurrently the carrying handle 18 is rotated in the direction shown by the arrow marked E in Figs. 1 and 2. Accordingly, the engagement of the catch member 24 of the seat base 16 with the hook portion 36 of the base portion 28 is released so that the infant seat 10 can be removed from the seat base 16.

When the infant is placed in the infant seat 10, one pair of belt inserting holes are selected from among the plurality of belt inserting holes 86 and the shoulder belt 78 can be drawn-out therefrom and over the upper side of the shoulder of the infant. Subsequently, the crotch belt 76 drawn-out from the lower side of the seat cushion 14 is held between the infant's legs.

Thereafter, the shoulder belt 78 drawn-out from the upper side of the shoulder is connected via the pair of tongue plates 88A, 88B and the buckle 84 to the crotch belt 76. As a result, the seat belt 66 is in a secured condition. At this time, the length of the shoulder belt 78 is adjusted by the belt adjusting metal 90 to secure the infant in the optimal position.

When the infant seat 10 is reclined by bringing down the seat back 12 of the infant seat 10, the reclining lever 72 is activated to draw-out the lock pin 68 from the pin inserting hole 74 of the seat cushion 14. Thus, the seat back 12 becomes optionally rotatable. After the seat back 12 is rotated to a desired inclined position, the reclining lever 72 is turned back and the lock pin 68 is inserted into the pin inserting hole 74 of the cushion 14. As a result, the seat back 12 can be held in a predetermined inclined position.

The length of the seat belt 66 required for securing the infant is varied by varying a tilt angle of the seat back 12. That is, if the tilt angle of the seat back 12 is varied, a distance between the belt inserting hole 86 of the seat back 12 and the belt inserting hole 82 of the seat cushion 14 is varied, and the length of the seat belt 66 required for securing the infant in the optimal position is varied.

In the embodiment, the securing position of the crotch belt 76 of the seat belt 66, i.e., the crotch belt anchor 80 is moved according to the inclination of the seat back 12.

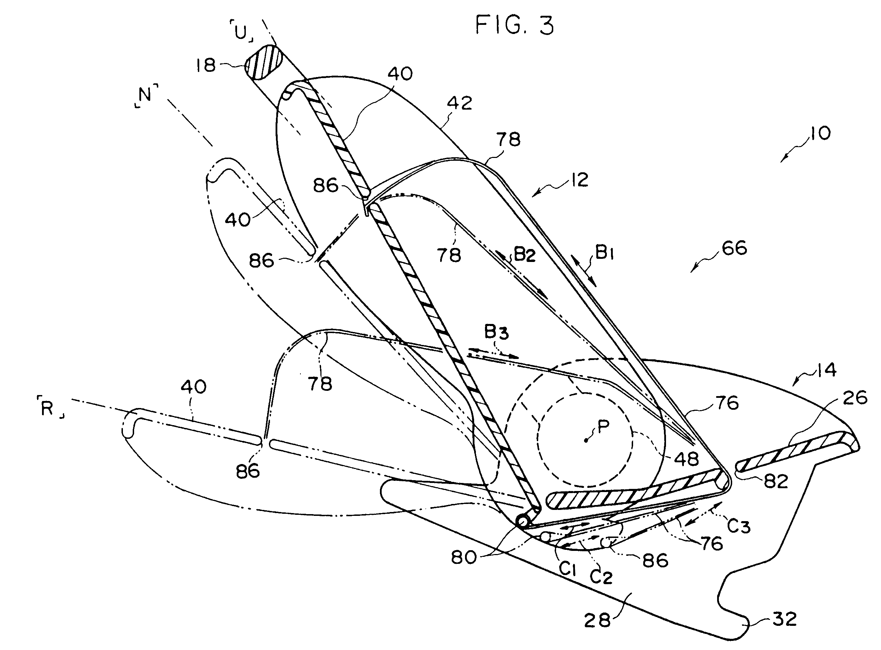

Fig. 3 illustrates a schematic sectional view of the infant seat 10. In Fig. 3, a point P denotes an axial center at a time when the seat back 12 is rotated. Lengths B1, B2 and B3 respectively denote the length between the belt inserting hole 86 of the seat back 12 and the belt inserting hole 82 of the seat cushion 14, which is required for securing the infant in the optimal position by the seat belt 66 with the seat back 12 respectively disposed at a "U" position (an upright position), an "N" position (a normal position), and an "R" position (a reclining position). Lengths C1, C2 and C3 denote the length of the seat belt 66 (crotch belt 76) between the crotch belt anchor 80 and the belt inserting hole 82 of the seat cushion 14 at the respective inclined positions of the seat back 12.

When the seat back is raised up to the "N" position from the "U" position as shown in Fig. 3, the length of the seat belt 66 is decreased from the length B2 to the length B1. On the other hand, the length of the seat belt 66 is increased from the length C2 to the length C1 under the seat cushion 14 since the position of the crotch belt anchor 80 moves. That is, the seat belt 66 is pulled back toward the lower side of the seat cushion 14 by the crotch belt anchor 80 when raising up the seat back 12.

When the seat back 12 is brought down from the "N" position to the "R" position, the crotch belt anchor 80 is moved to be close toward the belt inserting hole 82 under the seat cushion 14. Thus, the length C2 is reduced to the length C3. The length of the seat belt 66 partly used for securing the infant is increased from the length B2 to the length B3 in response to the inclination of the seat back 12. The seat belt 66 is drawn-out from the lower side of the seat cushion 14 by the increased length.

As described hereinbefore, the crotch belt anchor 80 to which one end of the seat belt 66 is connected is moved according to the tilt angle of the seat back 12. Therefore, it is possible to secure the infant in the infant seat 10 in the optimal position without adjusting the length of the seat belt 66.

In the embodiment, an infant seat mounted to the vehicle by the seat base 16 has been illustratively described. However, it must be noted that a mounting method of the infant seat according to the present invention should not be limited to the embodiment, and the infant seat may be used as a reclining type baby baggy and the like. That is, the present invention may be applied to an infant seat in which the infant is secured by the seat belt, and the inclination of the seat back is varied for reclining.

Further, it must be noted that the infant seat according to the present invention should not be limited to the infant seat for a baby though the infant seat 10 of the embodiment is used for a baby.

## Claims

1. An infant seat (10) comprising:
a seat cushion (14) for holding a hip portion of an infant;
a seat back (12) connected to said seat cushion so as to be rotatable about a rotary shaft (44) of said seat back (12) to hold a body portion and a head portion of said infant;
a shoulder belt (78) connected to said seat back (12);
a crotch belt (76) drawn-out from a predetermined position of said seat cushion (14), one end of said crotch belt (76) engaging said shoulder belt (78) to secure said infant in said infant seat (10);
an anchor member (80) provided on said seat back (12) and provided apart from said rotary shaft (44), and to which the other end of said crotch belt (76) is connected after passing on a sitting portion (26) provided for said seat cushion (14), said anchor member (80) moving relative to said seat cushion (14) according to an amount of a tilt angle of said back (12) when said tilt angle of said seat back (12) to said seat cushion (14) is varied, characterized in that said anchor member (80) is provided such that said other end of the crotch belt (76) is connected thereto after passing on a a lower surface side of said sitting portion (26) and that an intermediate portion of said crotch belt (76) is fed out from said predetermined position of said seat cushion (14) to an upper surface side of said sitting portion (26) of said seat cushion (14) and is pulled back to the lower surface side of said sitting portion (26) of said seat cushion (14), so as to secure with a substantially constant securing force said infant secured to said infant seat (10).

2. An infant seat according to claim 1, wherein said seat cushion (14) has a winding portion at said predetermined position, said winding portion being wound at said intermediate portion of said crotch belt (76), and provided so as to move said intermediate portion to be fed out on said upper surface side of said sitting portion (26) and so as to move said intermediate portion to be pulled back on said lower surface side of said sitting portion (26).

3. An infant seat according to claim 2, wherein said winding member has a through hole (82) for communicating said upper surface side of said sitting portion with said lower surface side of said sitting portion.

4. An infant seat according to at least one of the claims 1 to 3, wherein said crotch belt (76) has a constant length from said one end to said other end of said crotch belt (76).

5. An infant seat accordint to at least one of the claims 1 to 4, further comprising:
an angle adjusting means for adjusting an inclination of said seat back (12) with respect to said seat cushion (14).

6. An infant seat according to claim 5, wherein said angle adjusting means has at least one projecting member (68), a plurality of projecting member anchoring members (74) which are provided corresponding to said projecting member (68), and a projecting member moving member (70), said projecting member (68) engaging one of the plurality of projecting member anchoring members (74) to hold said seat back (12) to said seat cushion (14) at a regular angle, said projecting member moving member (70) allowing said projecting member (68) to project so as to engage said plurality of projecting member anchoring members (74) and allowing said projecting member (68) to be drawn in so as to release an engagement of said projecting member (68) with said projecting member anchoring member (74).

7. An infant seat according to claim 6, wherein said projecting member (68) and said projecting member moving member (74) are provided for one of said seat back (12) and said seat cushion (14).

8. An infant seat according to claim 6 or 7, wherein said projecting member anchoring member (74) is provided for the other of said seat back (12) and said seat cushion (14).

9. An infant seat according to at least one of the claims 6 to 8, projecting member (68) is a pin.

10. An infant seat according to claim 9, wherein said projecting member anchoring member (74) is a projecting member insertion hole.

11. An infant seat according to at least one of the clams 1 to 10, further comprising:
a seat securing means for securing said infant seat (10) to a predetermined position within a vehicle cabin.

12. An infant seat according to claim 11, wherein said seat securing means has a base member (16), a catch member (24) and a hook member (36), said base member (16) being secured to a predetermined position in said vehicle cabin, said catch member (24) being secured to said base member (16), and said hook member (36) being mounted on said seat cushion (14) so as to secure said infant seat (10) by said hook member (36) engaging said catch member (24).

13. An infant seat according to at least one of the claims 1 to 12, further comprising:
a substantially rectangular carrying handle (18) provided for said seat cushion (14) so as to have both ends rotatably provided coaxially with said rotary shaft.

14. An infant seat according to at least one of the claims 11 to 13, further comprising:
a secured seat releasing means for releasing said infant seat (10) secured to said predetermined position of said vehicle cabin by said seat securing means.

15. An infant seat according to claims 13 and 14, wherein said secured seat releasing means has a plate member (54) rotatably provided coaxially with said rotary shaft and provided between said seat cushion (14) and said carrying handle (18), and a long body (56) including one end provided on an outer periphery of said plate member (54) and the other end provided for said catch portion (24), said long body (56) moving by a rotation of said plate member (54) so as to release an engagement of said catch portion (24) with said hook portion (36).

16. An infant seat according to at least one of the claims 13 to 15 comprising:
a shade (92) removably provided for one of said carrying handle (18) and said seat back (12).

17. An infant seat according to at least one of the claims 1 to 16 further comprising:
a pair of head support cushions (94) provided in the vicinity of both sides of said seat back (12) to hold a head portion of said infant secured to said infant seat (10).

## Patentansprüche

1. Kleinkindersitz (10) mit:
- einem Sitzflächenteil (14) zum Halten des Hüftbereichs eines Kleinkindes;
- einer Rückenlehne (12), die mit dem Sitzflächenteil (14) derart verbunden ist, daß sie um eine eigene Drehachse (44) drehbar ist, zum Halten des Körperbereiches und des Kopfbereiches des Kleinkindes;
- einem an der Rückenlehne (12) befestigten Schultergurt (78);
- einem aus einer vorbestimmten Stelle des Sitzflächenteils (14) herausgezogenen Beckengurt (76), dessen eines Ende zum Festhalten des Kleinkindes im Kleinkindersitz (10) mit dem Schultergurt (78) verbunden ist;
- einem an der Rückenlehne (12) und neben der Drehachse (44) vorgesehenen Verankerungsteil (80), an dem das andere Ende des Beckengurtes (76) befestigt ist, nachdem er an einer für das Sitzflächenteil (14) vorgesehene Sitzflächenauflage (26) weitergeführt ist, wobei sich das Verankerungsteil (80) entsprechend der Größe eines Neigungswinkels der Rückenlehne (14) relativ zum Sitzflächenteil (14) bewegt, wenn der Neigungswinkel zwischen der Rückenlehne (12) und dem Sitzflächenteil (14) verändert wird,
**dadurch gekennzeichnet**, daß das Verankerungsteil (80) so ausgebildet ist, daß das andere Ende des Beckengurtes (76) daran befestigt ist, nachdem es an der Unterseite der Sitzflächenauflage (26) weitergeführt ist, und daß ein mittlerer Abschnitt des Beckengurtes (76) aus der vorbestimmten Stelle des Sitzflächenteils (14) über die Oberseite der Sitzflächenauflage (26) des Sitzflächenteils (14) herausgezogen ist und zur Unterseite der Sitzflächenauflage (26) des Sitzflächenteils (14) zurückgezogen ist, um das auf dem Kleinkindersitz (10) festgeschnallte Kleinkind mit einer im wesentlichen konstanten Haltekraft festzuhalten.

2. Kleinkindersitz nach Anspruch 1, dadurch gekennzeichnet, daß das Sitzflächenteil (14) an der vorbestimmten Stelle einen umgebogenen Abschnitt hat, wobei der umgebogene Abschnitt im mittleren Abschnitt des Beckengurts (76) umgebogen und so ausgebildet ist, daß der mittlere Abschnitt bewegbar ist, damit er sich zur Oberseite des Sitzflächenauflage (26) ziehen läßt, und daß der mittlere Abschnitt bewegbar ist, damit er sich zur Unterseite der Sitzflächenauflage (26) zurückziehen läßt.

3. Kleinkindersitz nach Anspruch 2, dadurch gekennzeichnet, daß das umgebogene Teil ein Durchgangsloch (82) aufweist, um die Oberseite der Sitzflächenauflage mit der Unterseite der Sitzflächenauflage zu verbinden.

4. Kleinkindersitz nach wenigstens einem der Ansprüche 1 bis 3, dadurch gekennzeichnet, daß der Beckengurt (76) eine konstante Länge vom einen zum anderen Ende des Beckengurtes (76) hat.

5. Kleinkindersitz nach wenigstens einem der Ansprüche 1 bis 4, dadurch gekennzeichnet, daß er ferner ein Winkelverstellmittel zum Verstellen der Neigung der Rückenlehne (12) gegenüber dem Sitzflächenteil (14) aufweist.

6. Kleinkindersitz nach Anspruch 5, dadurch gekennzeichnet, daß das Winkelverstellmittel folgendes aufweist:
- wenigstens ein vorstehendes Teil (68),
- eine Anzahl ein vorstehendes Teil haltender Elemente (74), die entsprechend dem vorstehenden Teil (68) ausgebildet sind, und
- ein ein vorstehendes Teil bewegendes Teil (70), wobei das vorstehende Teil (68) in eines aus der Anzahl der ein vorstehendes Teil haltenden Elemente (74) eingreift, um die Rückenlehne (14) in einem festen Winkel am Sitzflächenteil (17) zu arretieren, wobei das ein vorstehendes Teil bewegende Teil (70) das vorstehende Teil (68) so vorstehen läßt, daß es in die Anzahl der ein vorstehendes Teil haltenden Elemente (74) eingreifen kann, und zuläßt, daß das vorstehende Teil (68) eingezogen werden kann, um den Eingriff des vorstehenden Teils (68) in das das vorstehende Teil haltende Element (74) zu lösen.

7. Kleinkindersitz nach Anspruch 6, dadurch gekennzeichnet, daß einerseits das vorstehende Teil (68) und das ein vorstehendes Teil bewegende Teil (74) entweder an der Rückenlehne (12) oder am Sitzflächenteil (14) vorgesehen sind.

8. Kleinkindersitz nach Anspruch 6 oder 7, dadurch gekennzeichnet, daß das ein vorstehendes Teil haltende Element (74) entweder am Sitzflächenteil (14) oder an der Rückenlehne (12) vorgesehen ist.

9. Kleinkindersitz nach wenigstens einem der Ansprüche 6 bis 8, dadurch gekennzeichnet, daß das vorstehende Teil (68) ein Stift ist.

10. Kleinkindersitz nach Anspruch 9, dadurch gekennzeichnet, daß das ein vorstehendes Teil haltende Element (74) ein Einrastloch für das vorstehende Teil ist.

11. Kleinkindersitz nach wenigstens einem der Ansprüche 1 bis 10, dadurch gekennzeichnet, daß er ferner ein Sitzbefestigungsmittel zum Befestigen des Kleinkindersitzes (10) an einer vorbestimmten Stelle innerhalb der Fahrzeugkabine aufweist.

12. Kleinkindersitz nach Anspruch 11, dadurch gekennzeichnet, daß das Sitzbefestigungsmittel folgendes aufweist: ein Sitzunterteil (16), ein Einrastteil (24) und ein Hakenteil (36), wobei das Sitzunterteil (16) an einer vorbestimmten Stelle in der Fahrzeugkabine, das Einrastteil (24) an dem Sitzunterteil (16) und das Hakenteil (36) an dem Sitzflächenteil (14) befestigt ist, um den Kleinkindersitz (10) mit Hilfe des Hakenteils (36), das in das Einrastteil (24) eingerastet ist, zu befestigen.

13. Kleinkindersitz nach wenigstens einem der Ansprüche 1 bis 12, dadurch gekennzeichnet, daß er ferner ein für das Sitzflächenteil (14) vorgesehenen, im wesentlichen rechteckigen Tragegriff (18) aufweist, der derart ausgebildet ist, daß beide Enden koaxial zur Drehachse drehbar sind.

14. Kleinkindersitz nach wenigstens einem der Ansprüche 11 bis 13, dadurch gekennzeichnet, daß er ferner ein Mittel zum Lösen eines befestigten Sitzes aufweist, um den an der vorbestimmten Stelle der Fahrzeugkabine durch Sitzbefestigungsmittel befestigten Kleinkindersitz (10) lösen zu können.

15. Kleinkindersitz nach Anspruch 13 und 14, dadurch gekennzeichnet, daß das Mittel zum Lösen eines befestigten Sitzes ein plattenförmiges Teil (54) aufweist, das koaxial zur Drehachse drehbar ausgeführt ist und zwischen dem Sitzflächenteil (14) und dem Tragegriff (18) vorgesehen ist, sowie ein längliches Teil (56) mit einem am äußeren Umfang des plattenförmigen Teils (54) vorgesehenen Ende und einem für das Einrastteil (24) vorgesehen Ende, wobei das längliche Teil (56) durch eine Drehung des plattenförmigen Teils (54) bewegt wird, um die Verrastung des Rastteils (24) mit dem Hakenteil (36) zu lösen.

16. Kleinkindersitz nach wenigstens einem der Ansprüche 13 bis 15, dadurch gekennzeichnet, daß er ein abnehmbar ausgeführtes Schirmverdeck (92) für den Tragegriff (18) oder die Rückenlehne (12) aufweist.

17. Kleinkindersitz nach wenigstens einem der Ansprüche 1 bis 16, dadurch gekennzeichnet, daß er ferner ein Paar in der Nähe der beiden Seiten der Rückenlehne (12) vorgesehener Kopfstützkissen (94) aufweist, um einen Teil des Kopfes des in dem Kleinkindersitz (10) festgeschnallten Kleinkinds zu halten.

## Revendications

1. Siège d'enfant (10), comprenant :
un coussin (14) de siège destiné à retenir une partie de hanche d'un enfant,
un dossier (12) de siège raccordé au coussin de manière qu'il puisse tourner autour d'un arbre rotatif (44) du dossier (12) et qu'il supporte une partie de corps et une partie de tête de l'enfant,
une sangle d'épaule (78) raccordée au dossier (12),
une sangle inférieure (76) tirée d'un emplacement prédéterminé du coussin de siège (14), une extrémité de la sangle inférieure (76) coopérant avec la sangle d'épaule (78) pour la retenue de l'enfant sur le siège d'enfant (10),
un organe d'ancrage (80) placé sur le dossier (12), à distance de l'arbre rotatif (44) et auquel est raccordée l'autre extrémité de la sangle inférieure (76) après passage sur une partie d'assise (26) formée par le coussin de siège (14), l'organe d'ancrage (80) se déplaçant par rapport au coussin de siège (14) en fonction de l'amplitude de l'angle d'inclinaison du dossier (12) lorsque l'angle d'inclinaison du dossier (12) varie par rapport au coussin (14),
caractérisé en ce que l'organe d'ancrage (80) est réalisé de manière que l'autre extrémité de la sangle inférieure (76) lui soit raccordée après passage sur une surface inférieure de la partie d'assise (26), et en ce qu'une partie intermédiaire de la sangle inférieure (76) est extraite de l'emplacement prédéterminé du coussin de siège (14) vers la surface supérieure de la partie d'assise (26) du coussin de siège (14) et est ramenée du côté de la surface inférieure de la partie d'assise (26) du coussin de siège (14) afin de maintenir avec une force pratiquement constante de retenue, l'enfant maintenu dans le siège d'enfant (10).

2. Siège d'enfant selon la revendication 1, dans lequel le coussin de siège (14) a une partie d'enroulement à l'emplacement prédéterminé, la partie d'enroulement assurant l'enroulement de la partie intermédiaire de la sangle inférieure (76) et étant prévue de manière que la partie intermédiaire soit extraite du côté de la surface supérieure de la partie d'assise (26) et que la partie intermédiaire soit rentrée au côté de la surface inférieure de la partie d'assise (26).

3. Siège d'enfant selon la revendication 2, dans lequel l'organe d'enroulement a un trou débouchant (82) faisant communiquer la face supérieure de la partie d'assise avec sa face inférieure.

4. Siège d'enfant selon l'une au moins des revendications 1 à 3, dans lequel la sangle inférieure (76) a une longueur constante entre la première extrémité et l'autre extrémité de la sangle inférieure (76).

5. Siège d'enfant selon l'une au moins des revendications 1 à 4, comprenant en outre un dispositif d'ajustement d'angle d'inclinaison du dossier (12) par rapport au coussin (14).

6. Siège d'enfant selon la revendication 5, dans lequel le dispositif d'ajustement d'angle comporte au moins un organe en saillie (68), plusieurs organes (74) d'ancrage de l'organe en saillie qui ont des positions correspondant à l'organe en saillie (68), et un organe (70) de déplacement de l'organe en saillie, l'organe en saillie (68) coopérant avec l'un des organes d'ancrage (74) pour la retenue du dossier (12) du siège sur le coussin (14) du siège à un angle normal, l'organe (70) de déplacement de l'organe en saillie permettant à l'organe en saillie (68) de dépasser afin qu'il coopère avec les organes d'ancrage (74) et permettant à l'organe en saillie (68) d'être rentré afin que l'organe en saillie (68) ne coopère plus avec l'organe d'ancrage (74).

7. Siège d'enfant selon la revendication 6, dans lequel l'organe en saillie (68) et l'organe (74) de déplacement de l'organe en saillie sont associés au dossier (12) ou au coussin de siège (14).

8. Siège d'enfant selon la revendication 6 ou 7, dans lequel l'organe d'ancrage (74) de l'organe en saillie est placé sur le coussin de siège (14) ou le dossier (12) respectivement.

9. Siège d'enfant selon l'une au moins des revendications 6 à 8, dans lequel l'organe en saillie (68) est une broche.

10. Siège d'enfant selon la revendication 9, dans lequel l'organe d'ancrage (74) de l'organe en saillie est un trou d'introduction de l'organe en saillie.

11. Siège d'enfant selon l'une au moins des revendications 1 à 10, comprenant en outre un dispositif de fixation du siège d'enfant (10) en position prédéterminée dans une cabine d'un véhicule.

12. Siège d'enfant selon la revendication 11, dans lequel le dispositif de fixation de siège comporte un organe de base (16), un organe d'accrochage (24) et un organe à crochet (36), l'organe de base (16) étant fixé à un emplacement prédéterminé dans la cabine du véhicule, l'organe d'accrochage (24) étant fixé à l'organe de base (16), et l'organe à crochet (36) étant monté sur le coussin de siège (14) pour la retenue du siège d'enfant (10) par l'organe à crochet (36) lorsqu'il coopère avec l'organe d'accrochage (24).

13. Siège d'enfant selon l'une quelconque des revendications 1 à 12, comprenant en outre une poignée pratiquement rectangulaire (18) de transport associée au coussin (14) de siège afin que les deux extrémités de la poignée soient rotatives et coaxiales à l'arbre rotatif.

14. Siège d'enfant selon l'une au moins des revendications 11 à 13, comprenant en outre un dispositif de libération du siège d'enfant (10) fixé en position prédéterminée dans la cabine du véhicule par le dispositif de fixation de siège.

15. Siège d'enfant selon les revendications 13 et 14, dans lequel le dispositif de libération du siège fixé comporte un organe (54) en forme de plaque monté rotatif et coaxial à l'arbre rotatif et placé entre le coussin de siège (14) et la poignée de transport (18), et un corps allongé (56) ayant une première extrémité placée sur la périphérie externe de l'organe (54) en forme de plaque et l'autre extrémité associée à la partie d'accrochage (24), le corps allongé (56) se déplaçant par rotation de l'organe (54) en forme de plaque afin que la coopération de la partie d'accrochage (24) et de la partie accrochée (36) soit supprimée.

16. Siège d'enfant selon l'une au moins des revendications 13 à 15, comprenant une capote (92) montée de façon amovible sur la poignée de transport (18) ou le dossier (12) du siège.

17. Siège d'enfant selon l'une au moins des revendications 1 à 16, comprenant en outre deux coussins (94) de support de tête placés à proximité des deux côtés du dossier (12) du siège et destinés à maintenir une partie de tête de l'enfant maintenu dans le siège d'enfant (10).
